Europäisches Patentamt

European Patent Office

Office européen des brevets

(11) Veröffentlichungsnummer: **0 317 501**
**A1**

# EUROPÄISCHE PATENTANMELDUNG

(21) Anmeldenummer: **88810739.8**

(22) Anmeldetag: **28.10.88**

(51) Int. Cl.⁴: **F 01 N 3/02**

(30) Priorität: **18.11.87 CH 4504/87**

(43) Veröffentlichungstag der Anmeldung:
**24.05.89 Patentblatt 89/21**

(84) Benannte Vertragsstaaten:
**AT BE CH DE ES FR GB GR IT LI LU NL SE**

(71) Anmelder: **SCHWEIZERISCHE ALUMINIUM AG**
**CH-3965 Chippis (CH)**

(72) Erfinder: **Mizrah, Tiberiu**
**Hohlenbaumstrasse 90**
**CH-8200 Schaffhausen (CH)**

**Maurer, Albert**
**Egelseeweg 4**
**CH-8240 Thayngen (CH)**

**Gabathuler, Jean-Pierre**
**Friedhofweg 2D**
**CH-8226 Schleitheim (CH)**

(54) Filter zur Reinigung der Abgase von Dieselmotoren.

(57) Bei einem Filter (10) aus hohlzylinderförmigen offenporigen Schaumkeramikzylinderelementen (11) und einem Boden (17) aus für Gase undurchlässigem Material als Einsatz in einem Filtertopf (20) zur Reinigung der Abgase von Dieselmotoren, bei dem die Abgase den filterwirksamen Teil im wesentlichen quer zur Zylinderachse durchströmen, treten beim Einbau der Schaumkeramikzylinderelemente (11) wegen mangelnder Planheit und Planparallelität der Stirnflächen (110) Biegemomente auf, die zum Bruch der Elemente (11) führen.

Ein Filter der oben genannten Art, bei dem die Stirnflächen (110) der Schaumkeramikzylinderelemente (11) mit temperatur- und thermoschockbeständigen, bei Raumtemperatur plastischen Materialschichten (120) versehen sind, werden die Biegemomente vermieden.

Fig. 1

EP 0 317 501 A1

**Beschreibung**

## FILTER ZUR REINIGUNG DER ABGASE VON DIESELMOTOREN

Die vorliegende Erfindung betrifft ein Filter aus hohlzylinderförmigen offenporigen Schaumkeramikzylinderelementen und einem Boden aus für Gase undurchlässigem Material als Einsatz in einen Filtertopf zur Reinigung der Abgase von Dieselmotoren, bei dem die Abgase den filterwirksamen Teil im wesentlichen quer zur Zylinderachse durchströmen.

Filter der vorgenannten Art sind bekannt.

Es hat sich beim Einbau der hohlzylinderförmigen offenporigen Schaumkeramikzylinderelementen in diese Filter gezeigt, dass eine absolute Planheit und Planparallelität der Stirnflächen der Keramikelemente notwendig ist, da sonst auftretende Biegemomente zum Bruch der Schaumkeramik vor Erreichen der notwendigen axialen mechanischen Vorspannung führen. Die mechanische Vorspannung wird im Einsatz des Filters üblicherweise durch die thermische Ausdehnung der zwischen den Schaumkeramikzylinderelementen angeordneten Schwellmatten bewirkt oder bei Verwendung von herkömmlichen mechanischen Spannvorrichtungen noch verstärkt.

Die notwendige Planheit und Planparallelität der beiden Stirnflächen eines Schaumkeramikzylinderelements wird durch den üblichen Sinterbrand der Schaumkeramik nicht erreicht. Es bieten sich verschiedene Lösungsmöglichkeiten an, um den an die Schaumkeramikzylinderelemente gestellten Forderungen nachzukommen, so zum Beispiel Nachschleifen oder elastisches Nachverformen durch Nachbrennen bei gleichzeitiger planparalleler Gewichtsbelastung der Stirnseiten des Schaumkeramikzylinderelements.

Das Nachschleifen hat den Nachteil, dass die empfindlichen Keramikstege während des Schleifprozesses zumindest teilweise ab- oder gar ausbrechen. so dass die Filterwirksamkeit in diesem Bereich verschlechtert wird. Ein Nachbrennen in der eben genannten Weise ist wegen der grossen Aufwendungen und damit verbundenen Kosten nicht tragbar.

Angesichts dieser Gegebenheiten haben sich die Erfinder die Aufgabe gesetzt, ein Filter der eingangs erwähnten Art zu schaffen, bei welchem Schaumkeramikzylinderelemente mit planen und planparallelen Stirnflächen zum Einsatz kommen, so dass Biegemomente nicht auftreten, und ein Verfahren anzugeben. welches die Herstellung von derartigen Filtern ermöglicht.

Erfindungsgemäss wird die gestellte Aufgabe durch ein Filter gelöst, welches sich nach dem Wortlaut des Anspruchs 1 auszeichnet. Vorteilhafte Weiterbildungen des erfindungsgemässen Filters sind durch die Merkmale der Ansprüche 2 und 3 gekennzeichnet.

Ferner wird die Teilaufgabe bezüglich der Herstellung eines Filters der erfindungsgemässen Art durch ein Verfahren gelöst, welches sich nach dem Wortlaut des Anspruchs 4 auszeichnet. Weitere Ausführungsformen des erfindungsgemässen Verfahrens kennzeichnen die Merkmale der Ansprüche 5 bis 7.

Weitere Vorteile, Merkmale und Einzelheiten des erfindungsgemässen Filters ergeben sich aus der Zeichnung; diese zeigt schematisch in

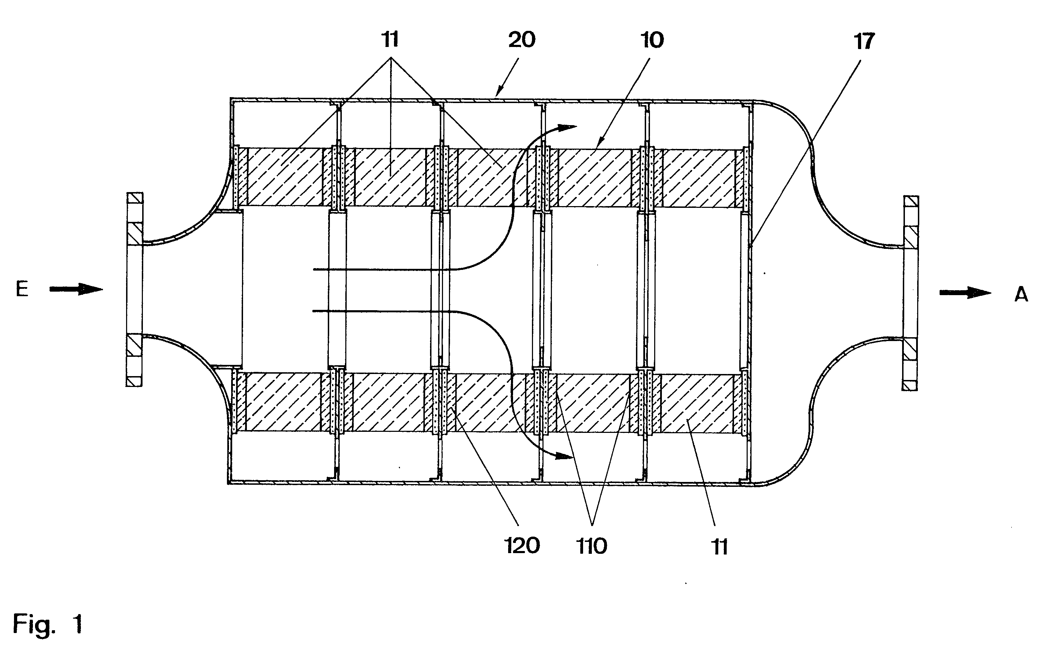

Fig.1 einen Längsschnitt durch einen Filtertopf mit erfindungsgemässem Filter und in

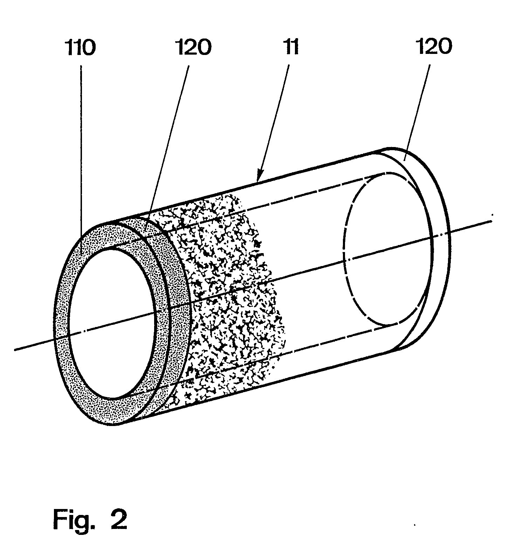

Fig.2 einen Längsschnitt durch ein Schaumkeramikzylinderelement.

Das Filter 10 besteht aus einem System von mehreren relativ kurzen Schaumkeramikzylinderelementen 11, die axial angeordnet sind. Ein Schaumkeramikzylinderelement 11 weist auf jeder Stirnfläche 110 eine temperatur- und thermoschockbeständige, bei Raumtemperatur plastische Materialschicht 120 auf. Diese Materialschicht besteht vorzugsweise aus einem feuerfesten Zementmörtel und ist für Abgase von Dieselmotoren undurchlässig.

Die Stirnflächen 110 können durch intrinsische Keramik vorverstärkt sein, was den besonderen Vorteil hat, dass die Pressung, welche die Elemente 11 im wesentlichen in axiale Richtung hält, besonders stark ausgeübt werden kann.

Die Schaumkeramikzylinderelemente 11 können nach dem Auftrag und planparallelen Glätten der Materialschichten -eventuell nach einem Antrocknungsprozess -- direkt zu einem Filter zusammengefügt werden, wobei während des anfänglichen Gebrauchs des Filters zur Reinigung der Abgase von Dieselmotoren auf Grund der erhöhten Temperatur sich die Materialschichten selbst verfestigen. Vorteilhafter ist es jedoch den Filter nach dem durch den Anspruch 4 gekennzeichneten Verfahren herzustellen, da so jedes einzelne Schaumkeramnikzylinderelement 11 vor dem Einbau in den Filter kontrolliert werden kann und gegebenenfalls die Materialschichten durch Ueberschleifen auf die geforderte Planheit und Planparallelität gebracht werden können.

**Patentansprüche**

1. Filter (10) aus hohlzylinderförmigen offenporigen Schaumkeramikzylinderelementen (11) und einem Boden (17) aus für Gase undurchlässigem Material als Einsatz in einen Filtertopf (20) zur Reinigung der Abgase von Dieselmotoren, bei dem die Abgase den filterwirksamen Teil im wesentlichen quer zur Zylinderachse durchströmen,
dadurch gekennzeichnet,
dass sich auf den Stirnflächen (110) der Schaumkeramikzylinderelemente (ii) temperatur- und thermoschockbeständige, bei Raumtemperatur plastische Materialschichten (120) befinden.

2. Filter (10) nach Anspruch 1, dadurch gekennzeichnet, dass die Materialschichten (120) aus feuerfestem Zementmörtel bestehen.

3. Filter (10) nach Anspruch 1 oder 2, dadurch gekennzeichnet, dass die Materialschichten (120) für Abgase undurchlässig sind.

4. Verfahren zur Herstellung eines Filters (10) nach einem der Ansprüche 1 bis 3, dadurch gekennzeichnet, dass vor dem Zusammenfügen der Schaumkeramikzylinderelemente (11) auf die Stirnflächen (110) derselben plastische Materialschichten (120) aufgetragen, planparallel geglättet, getrocknet und bei 1000 bis 1300° C gebrannt und dadurch mit dem Schaumkeramikzylinderelementmaterial verbunden werden.

5. Verfahren nach Anspruch 4, dadurch gekennzeichnet, dass die Materialschichten (120) nach dem Brand überschliffen werden.

6. Verfahren nach Anspruch 4 oder 5, dadurch gekennzeichnet, dass die Materialschichten (120) auf die ungebrannten Schaumkeramikzylinderelemente (11) aufgetragen werden.

7. Verfahren nach einem der Ansprüche 4 bis 6, dadurch gekennzeichnet, dass die Materialschichten (120) auf bereits mit intrinsischer Keramik verstärkten Stirnflächen (110) der Schaumkeramikzylinderelemente (11) aufgetragen werden.

Fig. 1

Fig. 2

EP 0 317 501 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 216 729  (SCHWEIZERISCHE ALUMINIUM AG) * Zusammenfassung; Figuren 1,3 * --- | 1,3 | F 01 N    3/02 |
| A | US-A-4 184 564  (TRAINOR) * Zusammenfassung; Figur 2; Spalte 2, Zeilen 25-29 * --- | 1,3 | |
| A | US-A-3 147 097  (AGUAS) * Spalte 2, Zeilen 7-14; Figur 2 * --- | 1,3 | |
| A | DE-A-3 217 357  (WÖRNER) ----- | | |

RECHERCHIERTE
SACHGEBIETE (Int. Cl.4)

F 01 N

Der vorliegende Recherchenbericht wurde für alle Patentansprüche erstellt

| Recherchenort | Abschlußdatum der Recherche | Prüfer |
|---|---|---|
| DEN HAAG | 14-12-1988 | ERNST J.L. |

EPO FORM 1503 03.82 (P0403)